Europäisches Patentamt

European Patent Office

Office européen des brevets

(11) Publication number: **0 161 912**
A2

# (12) EUROPEAN PATENT APPLICATION

(21) Application number: 85303286.0

(22) Date of filing: 09.05.85

(51) Int. Cl.⁴: **B 01 D 23/16**, B 01 D 23/24

(30) Priority: 11.05.84 GB 8412085

(43) Date of publication of application: 21.11.85
Bulletin 85/47

(84) Designated Contracting States: **AT BE CH DE FR GB IT LI LU NL SE**

(71) Applicant: **The Thames Water Authority, New River Head Rosebery Avenue, London EC1R 4TP (GB)**

(72) Inventor: **Weeks, Kenneth George, Warewick House 24 Spring View Road, Ware Hertfordshire SG12 9LB (GB)**

(74) Representative: **Jennings, Roy Alfred et al, GILL JENNINGS & EVERY 53-64 Chancery Lane, London WC2A 1HN (GB)**

(54) Improvements relating to clean water treatment.

(57) A method of operating a large scale slow sand filter in a clean water treatment plant is described in which the surface of the sand bed (3) is covered by a series of overlapping thin, flexible, water permeable sheets (8) to form a protective filter layer (7) so that the Schmutzdecke forms on the protective layer (7) instead of on the surface of the sand. When the Schmutzdecke is to be removed, this is done either by removing it from the protective layer (7) in situ, for example by suction dredging, or by removing the individual sheets (8) of the protective layer together with the Schmutzdecke, from the filter. A clean protective filter layer is then formed on the surface of the filter bed for continued operation of the filter. If desired, several protective filter layers (7) may be provided one on top of the other so that it becomes unnecessary to instal a clean filter layer (7) each time one is removed in order to remove the Schmutzdecke formed during the previous operation run of the filter.

THAMES WATER AUTHORITY                    GJE 41/2117/01

- 1 -

## Improvements Relating to Clean Water Treatment.

In the large scale treatment of water for consumption, known as clean water treatment, water from a reservoir is subjected to a primary filtration by a roughing filter and then to a secondary filtration by a large scale slow sand filter.

The roughing filter is usually a rapid gravity filter, which comprises a relatively small filter bed (e.g. in the region of 200 sq. metres) of coarse sand and gravel through which the water is arranged to drain relatively quickly from a head maintained above the bed. A rapid gravity filter needs frequent cleaning (sometimes as much as two or three times per day) and usually this is carried out by backwashing with water, or water and air, injected from beneath the filter bed.

The slow sand filter comprises a much larger flat bed of sand (e.g. in the region of 3,500 sq. metres) through which the water is arranged to filter relatively slowly from a head maintained above the bed by the supply of filtered water from the primary filter. In the course of time, silt collects and algae and weed begin to grow on the surface of the sand bed, forming what is known as "Schmutzdecke". As the thickness of the Schmutzdecke increases, the filtration rate of water through the sand bed decreases, and eventually the filter must be drained in order to remove the Schmutzdecke and restore the bed to operational efficiency. The Schmutzdecke is removed by mechanically skimming the top 2 to 5 cms. of sand (and with it the Schmutzdecke) from the bed, and usually this has to be done every few months. This is a relatively laborious and time consuming operation, and although the removed sand may be cleaned for re-use, the cleaning operation is fairly expensive. The filter bed may be initially about 75 cms. thick, and when this has been reduced by successive skimming operations to below about 30 cms. it is usual to remove the remainder of the bed completely and to replace it with a thick bed of fresh sand, again a time consuming and expensive operation having regard to the amount of sand involved.

The present invention relates primarily to this secondary filtration process, and aims to reduce the time, effort, and expense involved in periodically removing the Schmutzdecke in order to restore the slow sand filter bed to operational efficiency, but the invention may also be applied, with advantage, to the primary filtration process as well.

According to a first aspect of the invention therefore, we propose that in a method of operating a large scale slow sand filter the surface of the sand bed is covered by one or more thin, flexible, water permeable sheets to form a protective filter layer so that the Schmutzdecke forms on the protective layer instead of on the surface of the sand, and the Schmutzdecke is removed either from the protective layer in situ or by removing the protective layer, with the Schmutzdecke thereon, from the filter.

In this way the removal of the Schmutzdecke will leave the sand bed substantially clean and intact, apart perhaps from a small amount of sand which will adhere to the underside of the protective layer if this is removed, and although it is expected that the period between successive Schmutzdecke removals will be much the same as at present, the time taken for each removal will be much less. The method in accordance with the invention should therefore be very much quicker, easier, and more economic than the present skimming method, and should prove to be of considerable benefit to Water Authorities operating large areas of slow sand filter beds.

Furthermore, because the loss of sand from the filter bed is nil or virtually nil each time the Schmutzdecke is removed, the filter bed may have a longer operational life before needing to be replaced completely. Also, the initial thickness of the bed need not be so great, which will increase the filtration rate of the bed and will also lead to substantial savings in the cost of the bed. For example, at current rates, a reduction in the initial thickness of the bed by 30 cms. would realise a saving of approximately £2,000,000 on the cost of the sand needed for the 151 acres (61.35 hectares) of slow sand filter beds at present run by the Thames Water Authority.

Preferably the side walls of the filter are also covered by the sheet or sheets forming the protective filter layer, so that the need periodically to clean the side walls is also avoided or at least considerably reduced.

The or each sheet forming the protective filter layer preferably comprises a woven or non-woven synthetic fabric, which should be inert in water. The fabric is preferably denser than water so that it will rest naturally on the surface of the sand bed, but if it has a tendency to float the sheets may be held down on the surface of the bed in any suitable manner, for example, by metal mesh laid on top thereof. Preferably also, the fabric has a permeability to water which is substantially the same as the sand bed, and is similarly resistant to silt penetration.

If the Schmutzdecke is removed from the protective layer in situ, this may be done by suction dredging using a conventional suction dredging apparatus floating on the water above the filter bed, and in this case it may be necessary to prevent the sheet or sheets lifting from the surface of the bed, such as by metal mesh laid on top of the sheets as mentioned above.

If the Schmutzdecke is removed by removing the protective layer from the filter, this may be done by manually or mechanically rolling or folding up the or each sheet after first draining the water from the filter. One or more clean replacement sheets are then placed on the surface of the sand to form a fresh protective filter layer before refilling the filter with water and recommencing operation of the filter. Dirty sheets removed from the filter may be washed for subsequent re-use, which should prove a much less time and energy consuming process than the washing of the skimmed sand as carried out at present. Alternatively, if economically viable, the dirty sheets may even be discarded.

Preferably however, the protective layer, and with it the Schmutzdecke, is removed from the filter by raising the or each sheet from the surface of the sand bed and winding it onto a roller at the side of the filter, which can be carried out, if desired, without draining the filter. For this purpose it may be necessary for each sheet to be provided with strengthening cables along at least its edges (and preferably across the sheet as well), whereby the sheet may be raised from the surface of the bed by applying tension to the cables at opposite ends of the sheet. Alternatively or additionally, if it is the intention to remove the protective layer and the Schmutzdecke without draining the filter, each sheet may be fitted with inflatable buoyancy pockets which are inflated to assist the raising of the sheet from the sand bed.

Preferably each sheet is scraped and washed to remove the Schmutzdecke from the sheet as it is wound onto the roller at the side of the filter. The clean sheet may be wound back over the filter bed and lowered back down onto the bed, or alternatively a clean replacement sheet may be used. In the latter case it may be convenient to arrange that, as each dirty sheet is wound onto the roller, it simultaneously pulls a clean replacement sheet from the opposite side of the filter into position over the filter bed.

In a further preferred form of the method in accordance with the invention a plurality of protective filter layers are provided one on top of the other on the surface of the filter bed, and each protective layer is removed in turn from the top when it is desired to remove the Schmutzdecke which has formed thereon. This of course has the advantage that it is not necessary to install a clean protective layer each time one is removed with a Schmutzdecke layer, thus simplifying and reducing the filter servicing process still further. In addition, this method of operation using a plurality of protective filter layers one on top of the other should reduce silt penetration into the sand bed and thereby extend the useful life of the bed. Furthermore, this method of operation should prove particularly useful in the heavy weed growth season, i.e. early Spring to mid-Autumn, and in this respect it could also prove advantageous to operate the filter, at least during this period, with the surface of the water covered to reduce the penetration of solar energy and thereby reduce the rate of growth of the weed and hence the Schmutzdecke. A thermally insulating cover of the type which is commonly used for outdoor swimming pools would be ideal for this purpose.

As mentioned earlier, the invention may also be utilised in the primary filtration process, and according to a second aspect of the invention therefore, in a method of operating a rapid gravity filter from which the water is subsequently supplied to a slow sand filter, the surface of the sand and gravel bed of the rapid gravity filter is covered by one or more thin, flexible, water permeable sheets to form a protective filter layer on which solids in the water are deposited, and the solids are removed periodically by removing the protective layer from the filter.

The sheet or sheets forming the protective layer may be removed in any of the ways described earlier in relation to slow sand filters, preferably being raised from the surface of the filter bed and wound onto a roller at the side of the filter, the sheet being scraped and washed clean as it is wound onto the roller. Alternatively, in view of the relatively small size of the rapid gravity filter bed, the protective layer may be supported by a suspended frame which can be lifted bodily out of the filter in order to remove the protective layer.

Cleaning the rapid gravity filter bed in this way would be very much quicker and more economic than the current regular back washing method. The filter would need to be cleaned just as often, but the need to back wash the filter bed will be very much reduced.

Examples of methods in accordance with the invention will now be described with reference to the accompanying diagrammatic drawings, in which:-

Figure 1 is a plan view of a slow sand filter with its sand bed and walls covered by a protective filter layer formed by a plurality of overlapping thin fabric sheets;

Figure 2 is a cross-section through the slow sand filter of Figure 1 taken on the line B-B;

Figure 3 is a cross-section through the slow sand filter of Figure 1 taken on the line A-A and illustrating one method of operation;

Figure 4 is a view similar to that of Figure 3 but illustrating a different method of operation;

Figure 5 is a view similar to that of Figure 3 but illustrating a further different method of operation; and,

Figure 6 is a view similar to that of Figure 2 but illustrating a rapid gravity filter provided with a protective filter layer covering the filter bed and walls.

By way of an experiment to test the feasability of the method in accordance with the invention in a slow sand filter, a thin sheet of Fibertex (Trade Mark) grade F-2B, 5 metres wide by 60 metres long, was laid manually on part of the surface of a slow sand filter bed after the filter had been drained and the bed surface cleaned. Fibertex F-2B is a synthetic, non-woven, water permeable geotextile fabric manufactured by BSP International Foundations Limited, and has a thickness of 0.95 millimetres and a weight of 140 grams per square metre. Since the fabric is buoyant in water the sheet was overlaid by rigid weldmesh panels so that the sheet would be held down on the surface of the sand bed when the filter was filled with water. After an operational run of 168 days, the filter was drained, the weldmesh panels lifted out, and the Fibertex sheet rolled up manually to remove it and the Schmutzdecke which had formed thereon from the surface of the sand bed. The surface was left substantially clean, and although biological tests showed that bacterial numbers in the sand bed were lower than after normal operation without any covering, there appeared to be no objections to using the sheet or some other similar cover in the slow sand filtration stage of clean water treatment.

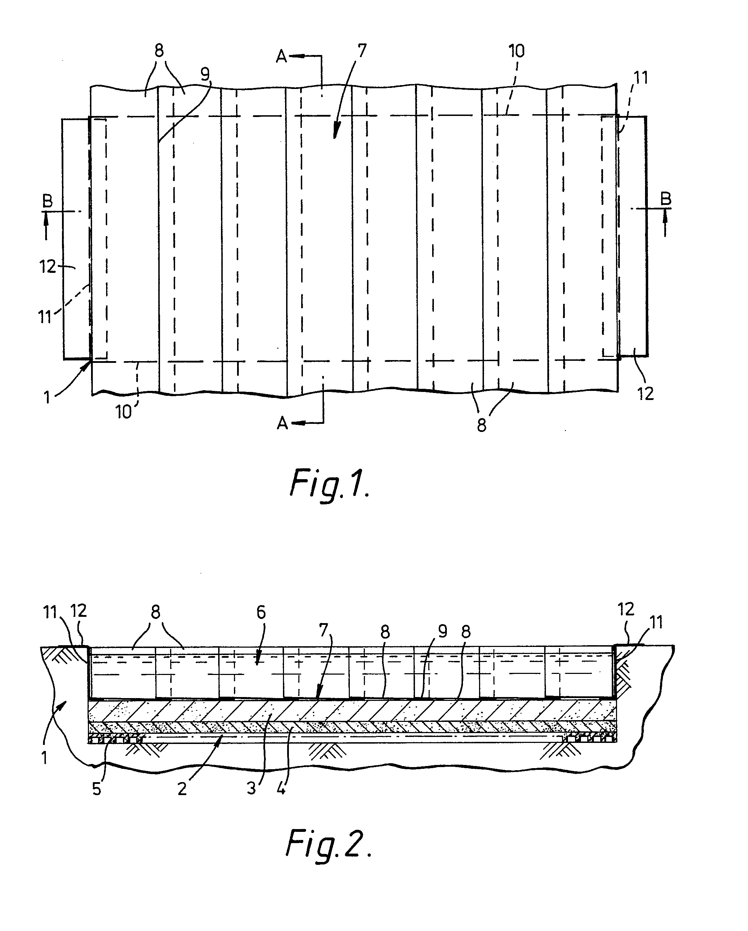

In practice the whole of the filter bed of a slow sand filter would be covered by a protective filter layer, for example as shown in Figures 1 and 2 which indicate a slow sand filter 1 having a conventional filter bed 2 comprising a flat bed of sand 3 covering a shingle bed 4 which in turn covers an under drainage system 5 for collecting the water which filters through the bed 2 from the head of water 6 which is maintained in the filter 1 above the bed 2. As shown, the surface of the sand bed 3 is completely covered by a protective filter layer 7 which is formed by a number of thin, flexible filter sheets 8 which are laid across the the bed 3 so that the edges of adjacent sheets overlap each other as indicated at 9. In addition to extending across the sand bed 3, each sheet 8 covers the opposite side walls 10 of the filter 1 and has its opposite ends suitably fixed alongside the filter. The end walls 11 of the filter 1 are also covered by similar sheets 12 as shown. If the sheets 8 and 12 are made of a fabric which is less dense than water, such as Fibertex as mentioned earlier, it will be necessary to overlay the portions of the sheets 8 covering the sand bed 3 with some means, e.g. weldmesh panels, for holding the sheets down.

With the protective filter layer 7 in position on the sand bed 3, the slow sand filter 1 is operated normally, and in the course of time the silt and weed growth which form the conventional Schmutzdecke accumulate on the protective layer 7. When the head loss of the filter 1 reaches a predetermined magnitude, this is usually taken as an indication that it is time to remove the Schmutzdecke, and as mentioned previously this may be done in a number of ways.

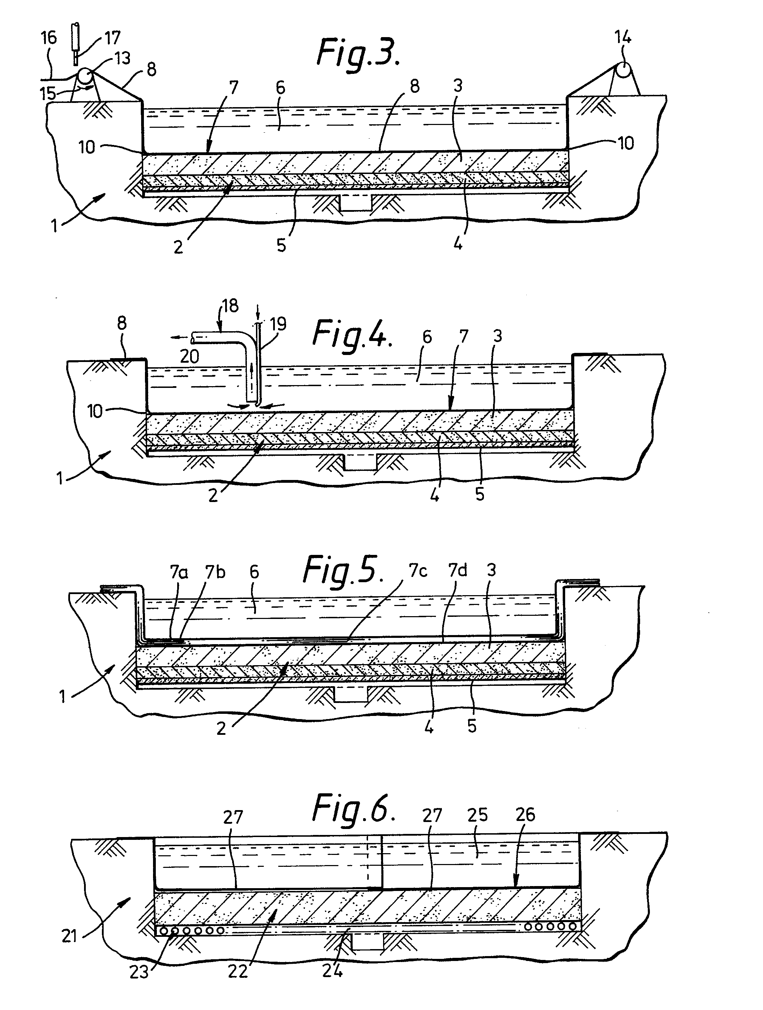

In the example illustrated in Figure 3, the opposite ends of each sheet 8 are attached to rollers 13 and 14 which are mounted adjacent the opposite sides 10 of the filter 1. By winding the roller 13 in the direction indicated by the arrow 15 while suitably braking the roller 14 to place the sheet 8 in tension, the sheet and the Schmutzdecke deposited thereon will be lifted from the surface of the sand bed 3 and drawn out of the filter as it is wound onto the roller 13. Simultaneously with the winding of the sheet 8 onto the roller 13, the Schmutzdecke is scraped and washed from the sheet 8 by means of a scraper 16 and high pressure water jet nozzles 17 suitable positioned adjacent the roller 13. Because the sheets 8 forming the protective layer 7 overlap each other, the sheets are removed and cleaned one after another commencing from the right-hand end of the filter 1 as shown in Figures 1 and 2. As each sheet 8 is wound onto the roller 13 a clean section of sheet may be drawn into the filter 1 from the roller 14 ready to be subsequently lowered onto the surface of the filter bed 2 before the next operational run of the filter 1 is commenced. Alternatively, after the sheet 8 has been fully wound onto the roller 13, and therefore fully cleaned. it may be rewound back into the filter 1 for re-use by reversing the operation of the rollers 13 and 14.

In the example illustrated in Figure 4, the protective layer 7 on the filter bed 2 is formed in the same way as described with reference to Figures 1 and 2, but in this case the individual sheets 8 are not removed from the filter 1 when it is desired to remove the Schmutzdecke. Instead, the Schmutzdecke is removed from the protective layer 7 in situ by a suction dredging operation using conventional suction dredging apparatus indicated generally at 18 in which compressed air is supplied via a downpipe 19 to dislodge the Schmutzdecke from the region of the protective layer 7 adjacent the lower end of the pipe 19,and a mixture of water and the loosened Schmutzdecke is removed by a combination of suction and air-lift through a riser and discharge pipe 20. As will be appreciated, the apparatus 18 will be moved progressively to clean the whole area of the protective filter layer 7.

In the example illustrated in Figure 5 the filter bed 2 is again covered by a protective filter layer formed in the same way as that described with reference to Figures 1 and 2, but in this case the filter 1 is provided with several such layers (four are shown as 7a to d) one on top of the other. When the Schmutzdecke which forms on the uppermost protective layer 7a is to be removed, this uppermost layer 7a is simply removed from the filter 1, carrying with it the Schmutzdecke, leaving the remaining clean filter layers 7b to d below it so that operation of the filter 1 can continue virtually without interruption. The uppermost filter layer may be removed by any suitable method, such as by a winching operation similar to that described with reference to Figure 3. Obviously, when all of the protective filter layers 7 a to d have been used and removed, replacement filter layers will have to be installed, and for this purpose it may be desirable to drain down the filter 1.

In the example shown in Figure 6, a rapid gravity filter 21 is shown comprising a conventional sand and gravel filter bed 22 located over an air and water back wash injection system 23 and an under drain system 24 for collecting the water which filters through the bed 22 from the head of water 25 maintained in the filter 21 above the bed 22. The filter bed 22 is covered by a protective filter layer 26 formed in a similar manner to that described with reference to Figures 1 and 2, but since a rapid gravity filter is very much smaller than a slow sand filter only two individual sheets 27 are required, and it may even be practical to form the layer 26 from a single sheet of the selected fabric. During operation of the rapid gravity filter 21, solids contained in the supply water collect on the protective filter layer 26, and frequent cleaning of this layer (sometimes two or three times per day) is necessary. For this purpose a suction dredging operation as described with reference to Figure 4 may be used, or the individual sheet or sheets 27 forming the protective layer 26 may be winched up and out of the filter 21, cleaned, and replaced in a manner similar to that described with reference to Figure 3.

0161912

- 14 -

CLAIMS

1. A method of operating a large scale slow sand filter (1) in which the Schmutzdecke which forms on the surface of the sand bed (3) is periodically removed, characterized in that the surface of the sand bed (3) is covered by one or more thin, flexible, water permeable sheets (8) to form a protective filter layer (7) so that the Schmutzdecke forms on the protective layer (7) instead of on the sand (3), and the Schmutzdecke is removed either from the protective layer (7) in situ or by removing the protective layer (7), with the Schmutzdecke thereon, from the filter (1).

2. A method according to Claim 1, in which the sheet or sheets (8) forming the protective filter layer (7) also cover the side walls (10,11) of the filter (1).

3. A method according to Claim 1 or Claim 2, in which the or each sheet (8) is a woven or non-woven synthetic fabric which is inert in water.

4. A method according to any one of the preceding Claims, in which the or each sheet (8) has a permeability to water which is substantially the same as that of the sand bed (3).

5. A method according to any one of the preceding Claims, in which the or each sheet (8) is denser than water so that the protective filter layer (7) will rest naturally on the surface of the sand bed (3).

- 15 -

6.      A method according to any one of Claims 1 to 4, in which metal mesh panels are laid on top of the protective filter layer (7) to hold it on the surface of the sand bed (3), and the metal mesh panels are removed prior to removal of the protective filter layer (7).

7.      A method according to any one of the preceding Claims, in which the protective layer (7), and with it the Schmutzdecke, is removed from the filter (1) by rolling or folding up the or each sheet (8) after first draining the water (6) from the filter (1).

8.      A method according to any one of Claims 1 to 6, in which the protective layer (7), and with it the Schmutzdecke, is removed from the filter (1) by raising the or each sheet (8) from the surface of the sand bed (3) and winding it onto a roller (13) at the side of the filter (1).

9.      A method according to Claim 8, in which the or each sheet (8) is provided with strengthening cables along at least the edges of the sheet, and the sheet is raised from the surface of the sand (3) by applying tension to the cables at opposite ends of the sheet.

10.      A method according to Claim 8 or Claim 9, in which the or each sheet (8) includes inflatable buoyancy pockets which are inflated to assist the raising of the sheet from the surface of the sand (3).

11.      A method according to any one of Claims 8 to 10, in which the or each sheet (8) is scraped

C161912

- 16 -

and washed by means (16, 17) to remove the Schmutzdecke from the sheet as it is wound onto the roller (13) at the side of the filter (1).

12. A method according to any one of Claims 8 to 11, in which the or each sheet (8), as it is wound onto the roller (13), simultaneously pulls a clean replacement sheet from the opposite side of the filter (1) into position over the filter bed (2).

13. A method according to any one of Claims 7 to 11, in which a plurality of protective filter layers (7a to d) are provided one on top of the other on the surface of the sand (3), and each protective layer is removed in turn from the top when it is desired to remove the Schmutzdecke which has formed thereon.

14. A method according to any one of Claims 1 to 6, in which the Schmutzdecke is removed from the protective layer (7) in situ by suction dredging (18).

15. A method according to any one of the preceding Claims, in which the growth of the

schmutzdecke, at least in the heavy weed growth season, is reduced by covering the surface of the water (6) in the filter (1) to reduce the penetration of solar energy.

16. A method of operating a rapid gravity filter (21) from which the filtered water is supplied to a slow sand filter, and the solids which are collected by the sand and gravel bed (22) of the rapid gravity filter (21) are periodically removed, characterized in that the surface of the sand and gravel bed (22) is covered by one or more thin, flexible, water-permeable
sheets (27) to form a protective filter layer
(26) on which the solids in the water are deposited,
and the solids are removed by removing the
protective layer (26) from the filter (21).

0161912

1/2

Fig.1.

Fig.2.

*Fig.3.*

*Fig.4.*

*Fig.5.*

*Fig.6.*